# EUROPEAN PATENT APPLICATION

(11) **EP 2 446 963 A1**
(43) Date of publication of application: **02.05.2012**
(21) Application number: 11186625.7
(22) Date of filing: 26.10.2011
(51) Int. Cl.: B01J 23/89, B01J 21/06, B01J 37/03, B01J 35/00, B01J 23/06, C07D 487/04, C08L 53/02

(54) **Ruthenium-based catalyst and use thereof in the selective hydrogenation of aromatic or polyunsaturated compounds**

(30) Priority: 27.10.2010 IT MI20101988
(71) Applicant: Polimeri Europa S.p.A., 20097 San Donato Milanese (MI) (IT)
(72) Inventor: Bencini, Elena, 46030 VIRGILIO (MN) (IT); Ronchin, Lucio, 31021 MOGLIANO VENETO (TV) (IT); Toniolo, Luigi, 35031 ABANO TERME (PD) (IT); Vavasori, Andrea, 30133 VENEZIA (VE) (IT)
(74) Representative: Bottero, Carlo

(57) **Abstract**

Catalyst suitable for the hydrogenation of aromatic or polyunsaturated compounds comprising a zirconia carrier (ZrO₂), containing ruthenium, as catalyst, and iron oxide (Fe₂O₃), as promoter, characterized in that at least one metal oxide, selected from those of the groups IB, IIB and IIIA, is present on the carrier as further promoter.

## Description

The present invention relates to a new catalyst based on ruthenium and its use in the selective hydrogenation of aromatic or polyunsaturated compounds.

More specifically, the present invention relates to a new catalyst based on ruthenium and its use in the selective hydrogenation of aromatic hydrocarbons, for example benzene and/or toluene and xylenes, or polyunsaturated compounds, for example dienes or α,β-unsaturated carbonyls.

The selective hydrogenation reaction of benzene to cyclohexene, for example, is part of reactions of interest for industrial chemistry due to the importance of this olefin as intermediate of numerous processes for the production of polymeric materials.

As is known, the selective hydrogenation reaction of benzene to cyclohexene is a heterogeneous gas/ liquid/solid reaction which takes place in the presence of a heterogeneous catalyst essentially consisting of ruthenium supported on an inert solid and insoluble in the reaction medium. The liquid phase consists, in turn, of two phases, an organic phase and an aqueous phase, the latter favouring the desorption of cyclohexene from the surface of the catalyst.

There are numerous documents in scientific literature relating to the preparation of catalytic systems based on ruthenium, suitable for the selective hydrogenation of polyunsaturated compounds. The following patents can be mentioned as examples: USA 4,734,536 and 5,589,600 which refer to ruthenium catalysts supported on zirconia and methods for their preparation. These methods, as is known, require a preparation of the catalyst in two steps, the first one relating to the synthesis of the metal catalyst in powder form, consequently with isolation and purification of the metals, whereas the second one relates to the deposition of the active elements on the inert carrier.

The Applicant has now found a new catalyst based on ruthenium which has proved to be particularly active in selective hydrogenation reactions when used with a particular combination of carriers and promoters. In addition, the preparation of the catalyst occurs in a single step instead of two steps as is the case for the processes described in the known art.

Processes which allow the preparation, in a single step, of catalytic systems suitable for the selective hydrogenation of polyunsaturated compounds, are known in the state of the art. See, for example, European patents EP 214,530, 170,915 and 554,765. The catalytic systems obtained, however, have proved to have a low efficacy in terms of conversion and selectivity in selective hydrogenation reactions, either due to the carrier, other than zirconia, or for the selection of the promoters.

The present invention is described in the claims, which are also an integral part of the present description.

An object of the present invention therefore relates to a catalyst suitable for the selective hydrogenation of aromatic or polyunsaturated compounds, comprising a zirconia carrier (ZrO₂) containing ruthenium, as catalyst, and iron oxide (Fe₂O₃), as promoter, characterized in that at least one metal oxide selected from those of groups IB, IIB and IIIA, is present on the carrier, as further promoter.

Preferred metal promoters, according to the present invention, are copper, zinc and gallium, present as CuO, ZnO, Ga₂O₃. The pairs gallium-zinc and copper-zinc are particularly preferred.

In particular, the ruthenium content in the solid catalytic system ranges from 20 to 55% by weight with respect to the weight of the zirconia carrier, whereas the promoters are present in an amount ranging from 2 to 20% by weight, with respect to the metallic ruthenium. The molar ratios between the promoters are substantially unitary or range from 0.5 to 1.5.

Aromatic compounds which can which can be selectively hydrogenated by means of the catalyst, object of the present invention, are benzene, toluene, xylenes, phenol, biphenyl, biphenol A, naphthalene, anthracene, etc..

Polyunsaturated compounds which can be selectively hydrogenated through the catalyst, object of the present invention, are dienes, such as 1,3-butadiene or isoprene, or α,β-unsaturated carbonylic compounds such as acrolein, methyl methacrylate, methyl acrylate, ethyl acrylate, butyl acrylate, 1,3-butene-2-one, acrylamide, acrylonitrile, etc..

Benzene is the preferred product.

The ruthenium-based catalyst, object of the present invention, can be prepared by precipitating, in sequence, hydrolyzable salts of the single metals. In particular, a zirconium alcoholate, for example Zr(OPr)₄, in i-propanol, is charged into an aqueous solution of an alkaline metal hydroxide, KOH for example, which, under stirring, forms zirconia which precipitates in the form of a finely divided solid. Hydrolyzable salts of the promoters are subsequently fed, which precipitate as oxides, and finally the solution of a hydrolyzable salt of ruthenium, for example a Ru halide, is added, still under stirring.

The solution/dispersion thus obtained is heated to a temperature ranging from 50 to 100°C and is then transferred to an autoclave where it is maintained at a temperature ranging from 120 to 180°C and a hydrogen pressure ranging from 3 to 6 MPa, constantly under stirring.

At the end of the treatment, the solid precipitated is recovered by centrifugation.

The catalyst, object of the present invention, can be used for the selective hydrogenation of aromatic or polyunsaturated compounds, for example for the selective hydrogenation of benzene to cyclohexene. A further object of the present invention therefore relates to a process for the selective hydrogenation of aromatic or polyunsaturated compounds comprising:
i. charging a heterogeneous catalyst into an aqueous solution containing from 5 to 15% by weight of an alkaline hydroxide, preferably potassium hydroxide, said heterogeneous catalyst comprising a zirconia carrier containing ruthenium and an iron oxide (Fe₂O₃) promoter, as catalytic system;
ii. charging the aromatic or polyunsaturated compound, into the aqueous solution, under stirring,;
iii. reacting the dispersed aromatic or polyunsaturated compound, with a continuous stream of hydrogen;
iv. recovering, at the end of the reaction, the compound selectively hydrogenated by demixing the organic phase from the liquid phase and distillation of the organic phase
characterized in that the heterogeneous catalyst comprises a further promoter selected from at least one metal oxide selected from groups IB, IIB and IIIA.

According to this further aspect of the present invention, the process for the selective hydrogenation of aromatic compounds, such as benzene, or polyunsaturated compounds, is carried out in an autoclave, at a temperature ranging from 120 to 180°C and a pressure ranging from 4 to 6 MPa. Under these conditions, in order to maximize the yield, for example, to cyclohexene and minimize the yield, for example, to cyclohexane, the reaction times preferably range from 40 to 80 minutes.

Some illustrative and non-limiting examples are provided hereunder for the embodiment of the present invention and for a better illustration thereof.

### Example 1

40 mL of KOH solution at 10% are poured into a 250 mL flask, 1 mL of Zr(OPr)₄ at 70% in i-PrOH is then rapidly added under stirring. The formation of ZrO₂ is practically immediate. The suspension is left under stirring for a few minutes. 10 mL of a 4% FeCl₃·7H₂O solution, 10 ml of H₂O in which 60 mg of Ga₂(SO₄)₃·H₂O, (**M1**) are dispersed, and finally 10 ml of a 0.6% solution of ZnSO₄·H₂O, (**M2**), are subsequently rapidly added in sequence to the suspension. A solution of RuCl₃ (10 mL at 3.2% as Ru) is added to the suspension under vigorous stirring. Still under stirring, the suspension is heated to a temperature of 80°C by means of a thermostatic oil bath.

The stirring and heating are interrupted and the solid is left to cool and settle. The supernatant liquid is subsequently eliminated. The solid is dispersed in distilled water and transferred to an autoclave. The reactor is pressurized with 4 MPa of H₂ and heated to a temperature of 150°C. The system is left under these temperature and pressure conditions, under mechanical stirring, for 1 hour and is then cooled to room temperature. The autoclave is depressurized and the solid is separated from the liquid by centrifugation and is then dried under vacuum. About 0.9 gr of catalyst at 40% of Ru were obtained from this preparation and kept in a drier.

A semi-continuous reactor (autoclave) was used for the hydrogenation tests of benzene. The stirring is guaranteed by a self-sucking turbine connected to a magnetic entrainment system. The thermostat-regulation of the reactor is ensured by an oil bath, equipped with a temperature regulation system, directly connected to a thermo-resistance positioned inside the reactor itself. The charging of benzene takes place by introduction from a charging autoclave thermostat-regulated to the reaction temperature.

In a typical experiment, 40 ml of an aqueous solution at 18% of ZnSO₄·7H₂O and 120 mg of Ru-based catalyst, as previously prepared, are charged into the reactor. Benzene is charged into the charging-autoclave and the air is cleared from the whole system with N₂ and subsequently with H₂ and is pressurized at 3 MPa of H₂. The autoclaves are then heated to a temperature of 150°C and the pressure reaches about 4 MPa. The pressure of the reaction autoclave is brought to 5 MPa and the two autoclaves are connected. Benzene flows rapidly into the main reactor and a stirring rate is then regulated to 1,500 rev/min. The reactor pressure is kept constant by means of a pressure regulator.

The reaction kinetics is followed by sampling of the organic phase. The sampling is effected by interrupting the stirring and the sample is analyzed by gas-chromatography.

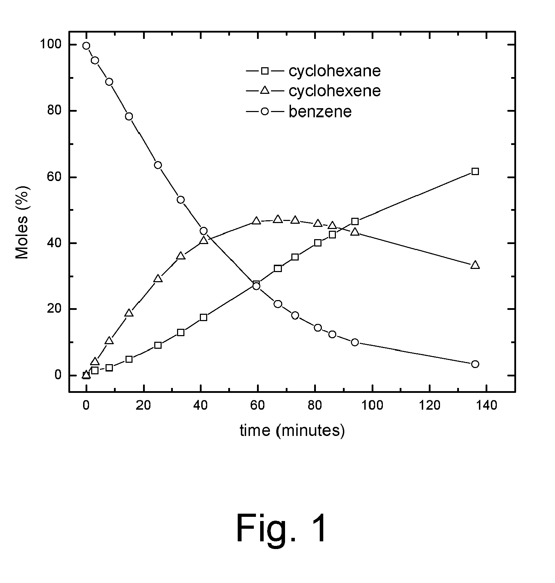

Figure 1 shows the kinetic relating to the catalyst of the example previously prepared Ru/ZrO₂/Fe₂O₃/Ga/Zn-KOH.

### Example 2

The same procedure is adopted as in example 1, but 60 mg of CuSO₄·5H₂O, (**M1**) are added, instead of 60 mg of Ga₂(SO₄)₃·H₂O.

### Example 3

The same procedure is adopted as in example 1, but the solution of ZnSO₄ is not added (**M2** is lacking).

### Example 4

The same procedure is adopted as in example 3 (**M2** is lacking), but 60 mg of CuSO₄·5H₂O (**M1**) are added instead of 60 mg Ga₂(SO₄)₃·H₂O.

### Example 5

The same procedure is adopted as in example 4, but 60 mg of ZnSO₄·5H₂O (**M1**) are added instead of 60 mg Ga₂(SO₄)₃·H₂O.

### Example 6

The same procedure is adopted as in example 4, but Ga₂(SO₄)₃·H₂O is not added (**M1** and **M2** are lacking).

Table 1 below shows the results of the activity and selectivity of the catalysts based on Ru for the hydrogenation of benzene to cyclohexene. Reaction conditions: T 150°C, P 50 bar, benzene 40 ml, ZnSO₄ 0.6 mol L⁻¹ solution 40 ml, catalyst 120 mg.

**Table 1**

| Ex. | Catalyst | M1 | M2 | Kinetics r₀ | Selectivity | Yield |
|---|---|---|---|---|---|---|
| 1 | Ru/ZrO₂/Fe/Ga/Zn KOH | Ga | Zn | 7.6 | 82 | 47 |
| 2 | Ru/ZrO₂/Fe/Ga/Cu KOH | Cu | Zn | 6.4 | 79 | 44 |
| 3 | Ru/ZrO₂/Fe/Ga KOH | Ga | - | 7.9 | 78 | 41 |
| 4 | Ru/ZrO₂/Fe/Cu KOH | Cu | - | 4.2 | 79 | 45 |
| 5 | Ru/ZrO₂/Fe/Zn KOH | Zn | - | 6.3 | 83 | 46 |
| 6 | Ru/ZrO₂/Fe KOH | - | - | 6.2 | 70 | 40 |

| | | | | | | |
|---|---|---|---|---|---|---|
| r₀ = 10² mol L⁻¹ s⁻¹ g_{cat}⁻¹ | | | | | | |

## Claims

1. A catalyst suitable for the selective hydrogenation of aromatic or polyunsaturated compounds comprising a zirconia carrier (ZrO₂) containing ruthenium, as catalyst, and iron oxide (Fe₂O₃), as promoter, **characterized in that** at least one metal oxide selected from those of groups IB, IIB and IIIA is present on the carrier as further promoter.

2. The catalyst according to claim 1, wherein the promoter metals are selected from copper, zinc and gallium, present as CuO, ZnO, Ga₂O₃.

3. The catalyst according to claim 1 or 2, consisting of ZrO_{2/}Ru/Fe/Ga/Zn.

4. The catalyst according to claim 1 or 2, consisting of ZrO₂/Ru/Fe/Cu/Zn.

5. The catalyst according to any of the previous claims, wherein the ruthenium content ranges from 20 to 55% by weight, with respect to the weight of the zirconia carrier.

6. The catalyst according to any of the previous claims, wherein the promoters are present in amounts ranging from 2 to 20% by weight with respect to the metal ruthenium.

7. The catalyst according to any of the previous claims, wherein the molar ratios between the promoters are substantially unitary or range from 0.5 to 1.5.

8. A process for the preparation of the ruthenium-based catalyst according to any of the previous claims, comprising the precipitation in sequence of the hydrolyzable salts of the single metals in an aqueous solution of an alkaline metal hydroxide.

9. The process according to claim 8, which comprises the precipitation, in an aqueous solution of KOH, under stirring, of a zirconium alcoholate which precipitates in the form of ZrO₂, finely divided, the hydrolyzable salts of the promoters are then fed, and finally the hydrolyzable ruthenium salt.

10. The process according to claim 8 or 9, wherein the solution/dispersion is heated to a temperature ranging from 50 to 100°C and then transferred to an autoclave where it is maintained at a temperature ranging from 120 to 180°C and a pressure ranging from 3 to 6 MPa, under constant stirring.

11. A process for the selective hydrogenation of aromatic or polyunsaturated compounds, which comprises:
i. charging a heterogeneous catalyst into an aqueous solution containing from 5 to 15% by weight of an alkaline hydroxide, said heterogeneous catalyst comprising a zirconia carrier containing ruthenium and an iron oxide (Fe₂O₃) promoter as catalytic system;
ii. charging the aromatic or polyunsaturated compound, into the aqueous solution, under stirring,;
v. reacting the dispersed aromatic or polyunsaturated compound, with a continuous stream of hydrogen;
vi. recovering, at the end of the reaction, the compound selectively hydrogenated by demixing the organic phase from the liquid phase and distillation of the organic phase
**characterized in that** the heterogeneous catalyst comprises a further promoter selected from at least one metal oxide selected from those of groups IB, IIB and IIIA.

12. The process for the selective hydrogenation of aromatic or polyunsaturated compounds according to claim 11, wherein said selective hydrogenation is carried out at a temperature ranging from 120 to 180°C and a pressure of 4 to 6 MPa.

13. The process for the selective hydrogenation of aromatic or polyunsaturated compounds according to claim 11 or 12, wherein benzene is the aromatic compound to be selectively hydrogenated to cyclohexene.

14. The process for the selective hydrogenation of aromatic or polyunsaturated compounds according to claim 13, wherein, in order to maximize the yield to cyclohexene and minimize the yield to cyclohexane, the reaction times range from 40 to 80 minutes.
